# EUROPEAN PATENT SPECIFICATION

(11) **EP 1 296 527 B1**
(45) Date of publication and mention of the grant of the patent: **08.06.2005**
(21) Application number: 01410122.4
(22) Date of filing: 25.09.2001
(51) Int. Cl.: H04Q 3/00

(54) **Process and apparatus for controlling the generation of statistical information in a CSS signaling node**
Verfahren und Vorrichtung zur Erzeugungssteuerung von statistischen Informationen in einem CSS Signalisierungsknoten
Méthode et dispositif pour contrôler la génération d'informations statistiques dans un noeud de signalisation CSS

(43) Date of publication of application: 26.03.2003
(73) Proprietor: Hewlett-Packard Company, A Delaware Corporation, Palo Alto, CA 94304 (US)
(72) Inventor: Sauvage, Pierre, 38450 Notre Dame de Commiers (FR)
(74) Representative: Lloyd, Richard Graham

(56) References cited:
- WO-A-01/20920
- BELINA F ET AL: "THE CCITT-SPECIFICATION AND DESCRIPTION LANGUAGE SDL" COMPUTER NETWORKS AND ISDN SYSTEMS, NORTH HOLLAND PUBLISHING. AMSTERDAM, NL, vol. 16, no. 4, 1 March 1988 (1988-03-01), pages 311-341, XP000027089 ISSN: 0169-7552

## Description

### Technical field of the invention

The invention relates to communication systems and more particular to a process and apparatus for controlling the generation of statistical information in a Common Channel System signaling node. The process is in charge of the protocol implementation and collects statistics for the network operation.

### Background art

The need for more and more services lead to the restructuration of telecommunication networks around a strong separation between the voice transmission functions and the signaling functions. In modern networks, based around the concept of *Common-Channel Signaling* (CCS) systems, the information that is exchanged between customers and networks, but also between the different exchanges forming parts of the networks, is conveyed on a dedicated separated signaling channel that is different from that used for the speech path. This separation occurs both within the Exchanges within the telecommunication networks and external to the Exchanges, thus allowing optimization of the control processes, the switch blocks and the signaling systems. CCS systems are a major part in the drive towards all-digital networks. Networks offering end-to-end digital communications between customers are termed '*Integrated Services Digital Networks' (ISDN)*.

CCITT N°7, superseding the former CCITT N°6, has become now the reference in the definition of common channel signaling systems which renders possible new services provided to customers by operators. General background information relevant to the systems and protocols which are involved in CCITT N°7, and more generally with CCS systems, can be found in document *'Common-channel signaling'* by R. Manterfield, Institution of Electrical Engineers, Telecommunications series 26, 1991 and also in the C.C.I.T.T. Specifications of Signaling System N°7, Recommendations Q. 700-Q716, Blue Book, Vol. VI - Fascicle VI.7, Geneva 1988 . An example of implementation of a CCITT N°7 signaling network is found in the article '*The HP OpenCall SS7 Platform'* by Denis Pierrot et al, Hewlett Packard Journal, August 1997, p. 58-64.

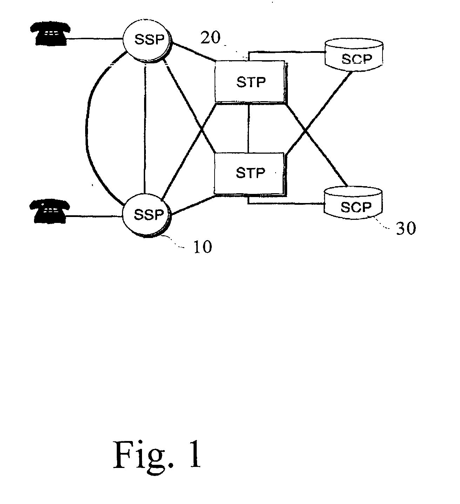

Figure 1 shows the known architecture of a telecommunication network based on a number of switches and application processors which are interconnected by transmission circuits. The SS7 network exists within the communication network and is used for controlling it by means of creating and transferring call processing, network management and maintenance messages to the network various components. The figure recalls the three basic components of the SS7 network: the Service Switching Points (SSP) 10, the Signal Transfer Points (STP) 20 and the Service Control Points (SCP) 30. These components are generally referred to as "nodes" or "signaling" points.

Considering now the particular architecture of a node or signaling point, the latter comprises a protocol stack for embodying the requirements of the SS7 and, further, an administration application which is used by the customer for handling and managing statistical information concerning the different entities of the telecommunication network, including the links and the destinations, which is reported back by the protocol stack. This statistics information shows to be very useful to the customer who can be aware of the existence of a congestion or whether a link, for instance, is in service or is out of service. However, the needs for statisticals information can substantially vary from one customer to another. Generally speaking, the telecommunication products manufacturers provide SS7 platform which are arranged to report a huge amount of statistical information elements, whatever the particular need of their customers.

Such a solution is clearly not satisfactory since the different customers may have different needs regarding statistical information and, further, may have needs varying with time. The generation and the collection of unnecessary information, as this is done today in the known SS7 platforms and signaling nodes, strongly increases the processing tasks, both in the protocol stack and in the administration application communicating with it. Telecommunication manufacturers wish to find a flexible solution which permits an easy adaptation to the customer's requirements while reducing the development costs. WO 01/20920 describes a system by which already generated call detail records (CDR) may be filtered using a CDR profile to filter out unwanted information,

### Summary of the invention

It is an object of the present invention to provide a process and apparatus for rendering more flexible the generation and the reporting of the statistical information of a protocol stack of a signaling node regarding the different entities of said signaling node.

It is another object of the present invention to provide a generic protocol stack for a telecommunication node, such as a SS7 signaling node for instance, and which offers improves communication and control means with an administration application handling statistical information.

It is a further object of the present invention to provide an improved Administration application which has enhanced means for controlling the generation of statistical information reported by a protocol stack of a signaling node of a telecommunication network.

These and other objects is achieved by means of a process for controlling the generation of statistical information being reported to a user or administration application by a Common Channel Signaling (CCS) protocol stack of a telecommunication node. The process involves the use of a Statistics Control File (SCF) file which is located within the protocol stack and which contains a description of the entities, including links and destinations, for which a statistical notification is to be reported to the user application. The SCF file is under control of the user or administration application. For performance reasons, the SCF may be implemented as an in memory database instead of a file.

By modifying the contents of said SCF file contained within the protocol stack via the administration application, the user is given the possibility to precisely define the particular statistical information for which he or she wants a report from the protocol stack.. Further, the protocol stack becomes generic and can be used for a wide range of different administration applications which can precisely control the particular information which is to be reported back to the user or administration application. The telecommunication product manufacturers are thus given the possibility to provide a generic CCS platform which can be easiiy customized and precisely adapted to the particular needs of different customers.

Further the use of the SCF file in the protocol stack permits to avoid the generation of unnecessary statistical information, which unnecessary statistical information is no longer to be created by the protocol stack and further, is no longer to be received and processed by the administration application.

In the preferred embodiment, the CSS platform is a SS7 platform which complies with the SS7 specification laid down by the CCITT and the local Statistics Control File (SCF) contains a description of the entities, expressed in terms of state machines, for which statistical information is to be reported which complies with the Specification and Description Language (SDL) standard . The user is therefore given an easy way to define via the administration application the precise information for which he/she wants a report and further the SS7 protocol stack can communication with a wide number of different user applications via the SDL description language.

Preferrably, the protocol stack executes the following steps:
- detecting (51) a change of the status of one SDL state machine
- determining (52) whether said state machine subject to a change is recited into said Statistics Control File (42);
- in response to said determination, preparing (54) and transmitting (55) to said user or administration application a specific notification concerning said change.

In one embodiment, the CSS or SS7 protocol stacks communicate with the user application by means of a Interconnect Process Communication channel (I.P.C.) which may, for instance, be based on a shared memory.

More preferably, the administration application is fitted with a Graphical User Interface (G.U.I.) which permits to easily create and update the contents of the Statistics Control File (SCF), thereby providing adaptability to a wide range of user requirements.

The invention also provides a CSS protocol stack, such as a SS7 protocol stack for instance, which communicates with an administration application and includes a local Statistical Control File (CSF) file containing a description of the different entities for which statistical information is to be reported to said administration application. Preferably, both CSS protocol stack and the administration application communicate with each other via a Interconnect Process Communication channel and the description which is contained within the SCF file complies with the Specification and Description Language (SDL) and the SCF contains SDL status of entities for which notifications are to be reported to the administration application.

At last the invention provides an administration application for handling statistical information relating to the different entities of a signaling node of a telecommunication network, said administration application including means for updating a Statistics Control File (SCF) located within a signaling protocol stack of the telecommunication network. Preferably, the administration application specifies the contents of the SCF file in a description complying with the Specification Description Language protocol.

### Description of the drawings:

An embodiment of the invention will now be described, by way of example only, with reference to the accompanying drawings, wherein:
Figure 1 illustrates the basic architecture of the SS7 network.
Figure 2 illustrates an architecture of a telecommunication node which incorporates the Statistical Control File for controlling the generation and the transmission of the statistics to the customer application.
Figure 3 shows the process for controlling the generation and the reporting of statistical information to the administration application.

### Description of the preferred embodiment.

The invention will now be more particularly described with reference to the SS7 signaling system which is clearly the current standard of the Common Channel Systems (C.C.S.) networks. However it should be clear that the invention is applicable to any CCS system based on the use of a common-signaling channel to carry signaling information for numerous traffic circuits. Generally speaking the signaling information is carried in messages and each message is delineated by a flag and the transaction to which a message refers is defined by an identifier. In circuit-related applications, the identifier used is the circuit number of the appropriate traffic circuit. In non-circuit-related applications, the identifier used is a reference number that is independent of traffic circuits. Each message contains an information field defining the meaning of the message and check bits that are used to detect message corruption during transmission. Messages are stored in buffers to await the opportunity to be transmitted. In parallel to the different notifications which are to be communicated to the signaling network, for the purpose of embodying the SS7 protocol stack, the protocol stack prepares a specific statistical information which is to be reported to a user application or administration application.

Further there is described a process for controlling the generation and the reporting of the statistical information is applicable to a wide range of different administration applications. In one particular example, the administration application can be a application which monitors the availability of the telecommunication network for the purpose of tracking the general quality and availability of the telecommunication network. Clearly, in such a application, the user will be particularly interested in receiving specific notification and messages prepared by the SS7 protocol stack and which concerns the failure of a link and the particular identification of the destination being subject of such a failure. It should be clear however that such an administration application is oniy an example and that the skilled man will straightforwardly adapt the process for controlling the generation and the reporting of statistical information to any kind of administration purpose.

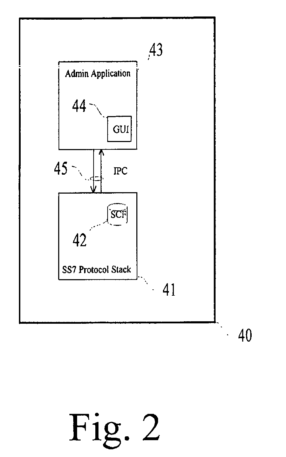

Figure 2 particularly shows the general architecture of a signaling node 40. The signal node comprises a protocol stack 41 which provides compliance with the SS7 protocol standard. As known by the skilled man the architecture adopted for modern CCS is based on dividing signaling functions into a number of tiers comprising self-contained groups of functions. A user can be a customer or a node in the network. Specifications are derived by defining a) the primitives used between adjacent tiers within a user, b) the procedures adopted for transferring information between corresponding tiers in different users and c) the format of the information transferred between corresponding tiers in different users. CCITT n°7 has been specified using two different types of tier-structure. Circuit-related functions are specified using a 4-level structure, whilst non-circuit-related functions are specified using the OSI 7-layer structure. Levels 1 to 3 of CCITT N°7 form the message-transfer-part (MTP), which is responsible for transferring messages from one signaling point to another, even in the event of link and network failures. Level 4 comprises the user parts, which define the meaning of the messages transferred by the MTP and the logical sequence of events for a particular application (eg telephony). Layers 1 to 3 of CCITT n°7 comprise a combination of the MTP and the Signaling-connection-control part (SCCP) The combination of the MTP and the SCCP provides a network-layer service to higher layers. Layers 4 to 7 of CCITT N°7 comprise transaction capability (TC) . TC is a protocol designed to carry non-circuit related data between nodes in the network.

Those different components of the signaling node will be referred as the SS7 protocol stack 41. Protocol stack 41 communicates with a user or administration application 41 via a channel 45, such as of the type Interconnect process Communication (IPC). Clearly, the particular embodiment of the IPC channel 45 closely depends upon the particular operating system being used. Alternately, the channel can be based on a shared memory but any other mechanism such as a TCP/IP based socket can be used.

The process for controlling the generation and the report of the statistical information is based on the existence of a Statistical Control File (SCF) 42 existing in the protocol stack 41 and which contains a description of the different entities for which statistical information is to be reported to the administration application 43. In the preferred embodiment, the description of the different entities - including the destinations and/or the links - is based on a Spectification and Description Language known by the skilled man. It should be noticed that the SDL language is a development tool which is traditionnaly reserved to the telecommunication development team for the purpose of creating telecommunication applications. The statistics controlling process which is described below substantially deviates from this traditional use by considering it as a *communication* tool between the SS7 protocol stack 41 and the user application 43 for the purpose of expressing entities in the SCF file 12 for which specific notifications are to be prepared by the protocol stack 41. The concept of entity is well known to the skilled man and an example of an entity is a link which can be in a idle state or congested or uncongested. There is provided to the customer a tool for precisely defining the SDL state machines and status for which he/she wants to gather information for. Generally speaking the SCF file 12 contains the information which precisely defines the state machine corresponding to the entity of interest, for instance a link, a destination or a circuit, and the particular state of this entity for which he/she wants a report, either when leaving the status (for instance CIC no more free: Call Control Processing Out Status Idle → CPCO SO out) or when entering the status (CIC seized: Call Control Processing Incoming → CPCI S4 In).

Multiple applications may benefit from this new method. For example, for the MTP level 3 layer, one application may be interested in the link status, to trigger an alarm to start a restore operation as soon as a link goes to the unavailable state and thus minimizing the unavailability duration. The monitored SDL status is then the link unavailable state as described Figure 28 q704 Signalling traffic management, link availability control (TLAC).

Another application may monitor the TCAP transaction status to know the instantaneous usage of the TCAP layer. The SDL TCAP transaction status is described in Figure 8 and A5 of recommendation Q.774. The usage monitoring allows a better network performance prediction.

The two previous examples, for MTP and TCAP, use the ITU Recommendation but the same kind of examples may apply to the ANSI T1.111 standard. The method is applicable to all standards using the SDL: ANSI, ITU, TTC and others.

In one particular embodiment, the statistics description uses the following syntax:
*SDL state machine; SDL status; Transition; Statistics reporting; IPC*
Where
The *SDL state machine* and the *SDL status* defines the particular entity for which a reporting notification is to be generated and reported to the administration application 43;
The *transition* is the transition IN or OUT concerning the state machine;
The Statistics Reporting is periodic for the purpose of gathering periodical statistics or, alternatively, is executed upon detection of the occurrence of a particular event when a status change arises;
IPC defines the particular way of communication between the stack protocol 41 and the administration application 43 , either by shared memory of by any equivalent Interconnect Process Communication channel mechanism.

The IPC may be any features supported by the operating system :signals, shared memory, file system, sockets,....The implementation must comply to performance, fault tolerance, supportability , portability constraints.

The above developments, given only by way of examples, show that any event or entity can be described by use of the SDL language and the corresponding description is then filed within the Statistical Control File (SCF) 42 existing in the protocol stack 41. The skilled man will adapt the particular SDL states machine to the requirements of his particular user application. Additional details concerning the use of the SDL description language can be found in the following reference document: "Functional Specification and Description language (SDL) , criteria four using formal description techniques (FDTS), Recommendations Z.100 and annexes A, B, C and E, Recommendations Z.110" ; in CCITT, Blue Book, Vol. X, Fascicle X.1, Geneva 1989.

In the preferred embodiment, the administration application is fitted with a Graphical User Interface 44 (G.U.I.) which permits to easily create and update the contents of the Statistics Control File (SCF) 42 contained within the protocol stack 41, thereby providing adaptability to a wide range of user requirements. Comfort in use can thus be substantially enhanced by the GUI which provides the user a wide and comprehensive list of the different entities for he may have a reporting. In particular a drag-and-drop mechanism is used for selecting one particular set of entities for which a reporting is requested. Preferrably, the GUI interface is used for allowing a dynamic update and control of Statistics Control File 42 for the purpose of allowing the user to dynamically change the reporting of the statistics information from the SS7 protocol stack.

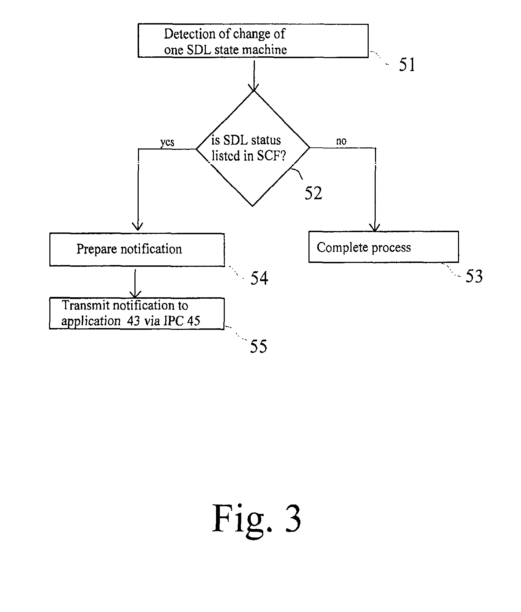

With respect to figure 3 there is shown the process for controlling the generation and the reporting of the statistics information to the administration application 43.

The process starts with a step 51 which consists in the detection of a change of the status of one entity.

In a steps 52, the process performs a test for determining whether the change concerns a SDL state machine which is recited within the SDL description file.

If the SDL state machine is not recited within the SCF file 42, then the process completes in a step 53 and the SDL state machine change is no further processed. In particular, there is no generation of a specific notification by the protocol stack 41 and therefore, no need to process it by administration application 43.

If the SDL state machine appears to be recited in the SCF file 12, the process proceeds to a step 54 where a specific notification concerning this state machine is prepared by the SS7 protocol stack 41.

In a step 55, the notification is transmitted to the administration application 43 and the process completes until the detection of a new change in the status of one SDL machine.

Therefore, it can be seen that the contents of the SCF file 12 precisely defines which statistics information will be reported to the application 43. Many benefits result from this new arrangement. Firstly, the arrangement is applicable for any state machines and any kind of information is made available to the user administration application 43 excepted the information regarding the volume of data transfer. Secondly, the statistics can be defined at run-time and every customer can define the statistics for which he/she needs a report without waiting for additional release or development of the SS7 platform or product. With the provision of the invention, the statistics report can be changed dynamically, simply by stopping and restarting the platform. Thirdly, it clearly results in the centralization of the software code implementing the statistics control process, thus minimizing and facilitating maintenance.

## Claims

1. A method of controlling the generation of statistical information to be reported to a user or administration application (43) by a common channel signalling protocol stack (41) of a telecommunications node (40) comprising the step of
maintaining within the protocol stack a statistical control file (42) containing details of entities, including links and destinations, for which a statistical notification is to be reported to the user or administration application;
**characterized by** the steps of
detecting a change in the status of an entity; and
determining the presence within the statistical control file (42) of information indicating whether statistical information related to the detected change in status should be reported, and if so generating (54) said statistical information and reporting (55) said information to the user or administration application.

2. The method according to claim 1, wherein the common channel signalling protocol is the signalling system 7, abbreviated as SS7, protocol, and further wherein the statistical control file (42) complies with the specification and description language, further referred to as SDL, and contains a description of the entities and corresponding state machines for which statistical information is to be reported to the user or administration application (43).

3. The method according to claim 2, wherein the SS7 protocol stack communicates with the user or administration application (43) through use of an Interconnect Process Channel (45), such as using shared memory or a TCP/IP based socket.

4. The method according to any previous claim, wherein the administration application includes a graphical user interface (44) for updating the contents of the staticial control file.

5. Apparatus for controlling the generating of statistical information to be reported to a user or administration application (43) by a common channel signalling protocol stack (41) of a telecommunications node (40), the apparatus comprising a statistical control file (42) containing details of entities, including links and destinations, for which a statistical notification is to be reported to the user or administration application;
**characterised in that** the apparatus further comprises:
means for detecting a change in the status of an entity; and
control logic for determining the presence within the statistical control file (42) of information indicating whether statistical information related to the detected change in status should be reported, and, if so, for generating (54) said statistical information and for reporting (55) said information to the user or administration application.

6. Apparatus according to claim 5, wherein the common channel signalling protocol is the SS7 protocol, and further wherein the statistical control file (42) complies with the specification and description langauge, further referred to as SDL, and contains a description of the entities and corresponding state machines for which statistical information is to be reported to the user or administration application (43).

7. Apparatus according to claim 6, wherein the SS7 protocol stack is arranged to communicate with the user or administration application (43) through use of an Interconnect Process Channel (45), such as using shared memory or a TCP/IP based socket.

8. Apparatus according to claim 7, wherein the administration application (43) includes a graphical user interface (44) for updating the contents of the statistical control file (42).

9. A common channel signalling system protocol stack (41) adapted to operate in accordance with the method of any of claims 1 to 4.

10. A common channel signalling system protocol stack (41) comprising:
a statistical control file (42) containing details of entities, including links and destinations, for which a statistical notification is to be reported to a user or an administration application;
**characterized by**
means for detecting a change in the status of an entity; and
control logic for determining the presence within the statistical control file (42) of information indicating whether statistical information related to the detected change in status should be reported, and, if so, for generating (54) said statistical information and for reporting (55) said information to the user or administration application.

11. A common channel signalling system protocol stack according to claim 10, wherein the common channel signalling protocol is the SS7 protocol, and further wherein the statistical control file (42) complies with the specification and description langauge, further referred to as SDL, and contains a description of the entities and corresponding state machines for which statistical information is to be reported to the user or administration application (43).

12. A common channel signalling system protocol stack according to claim 10 or 11, wherein the SS7 protocol stack is arranged to communicate with the user or administration application (43) through use of an Interconnect Process Channel (45), such as using shared memory or a TCP/IP based socket.

13. A common channel signalling system protocol stack according to claim 12, wherein the administration application (43) includes a graphical user interface (44) for updating the contents of the statisitical control file (42).

14. An administration application for a signaling node (40) of a telecommunication network which communicates with a Common Channel Signalling protocol stack (41), said administration application being **characterized in that** it includes means for updating a Statistical Control File (SCF) located within a signaling protocol stack of the telecommunication network thereby controlling the generation and the reporting of statistical information from said Common Channel Signalling protocol stack.

## Patentansprüche

1. Ein Verfahren zum Steuern der Erzeugung von statistischen Informationen, die einem Benutzer oder einer Verwaltungsanwendung (43) durch einen gemeinsamen Kanalsignalisierungsprotokollstapel (41) eines Telekommunikationsknotens (40) berichtet werden sollen, das folgende Schritte aufweist:
Beibehalten einer statistischen Steuerungsdatei (42) innerhalb des Protokollstapels, die Details von Entitäten enthält, einschließlich Verknüpfungen und Zielorte, für die eine statistische Benachrichtigung dem Benutzer oder der Verwaltungsanwendung berichtet werden soll;
**gekennzeichnet durch** folgende Schritte:
Erfassen einer Änderung in dem Status einer Entität; und
Bestimmen des Vorhandenseins von Informationen innerhalb der statistischen Steuerungsdatei (42), die anzeigen, ob statistische Informationen, die sich auf die erfasste Änderung in dem Status beziehen, berichtet werden sollen, und wenn ja, Erzeugen (54) der statistischen Informationen und Berichten (55) der Informationen dem Benutzer oder der Verwaltungsanwendung.

2. Das Verfahren gemäß Anspruch 1, bei dem das gemeinsame Kanalsignalisierungsprotokoll das Signalisierungssystem (7) ist, abgekürzt als SS7, und bei dem ferner die statistische Steuerungsdatei (42) der Spezifikations- und Beschreibungs-Sprache entspricht, ferner bezeichnet als SDL, und eine Beschreibung der Entitäten und entsprechender Zustandsmaschinen enthält, für die statistische Informationen dem Benutzer oder der Verwaltungsanwendung (43) berichtet werden sollen.

3. Das Verfahren gemäß Anspruch 2, bei dem der SS7-Protokollstapel mit dem Benutzer oder der Verwaltungsanwendung (43) durch Verwendung eines Verbindungsprozesskanals (45) kommuniziert, wie z. B. unter Verwendung eines gemeinschaftlich verwendeten Speichers oder eines TCP/IP-basierten Sockels.

4. Das Verfahren gemäß einem der vorangehenden Ansprüche, bei dem die Verwaltungsanwendung eine graphische Benutzerschnittstelle (44) umfasst, zum Aktualisieren der Inhalte der statistischen Steuerungsdatei.

5. Vorrichtung zum Steuern der Erzeugung von statistischen Informationen, die einem Benutzer oder einer Verwaltungsanwendung (43) durch einen gemeinsamen Kanalsignalisierungsprotokollstapel (41) eines Telekommunikationsknotens (40) berichtet werden sollen, wobei die Vorrichtung eine statistische Steuerungsdatei (42) aufweist, die Details von Entitäten enthält, die Verknüpfungen und Zielorte umfassen, für die eine statistische Benachrichtigung dem Benutzer oder der Verwaltungsanwendung berichtet werden soll;
**dadurch gekennzeichnet, dass** die Vorrichtung ferner folgendes aufweist:
eine Einrichtung zum Erfassen einer Änderung bei dem Status einer Entität; und
eine Steuerungslogik zum Bestimmen des Vorhandenseins von Informationen innerhalb der statistischen Steuerungsdatei (42), die anzeigen, ob statistische Informationen, die sich auf die erfasste Änderung bei dem Status beziehen, berichtet werden sollen, und wenn ja, zum Erzeugen (54) der statistischen Informationen und zum Berichten (55) der Informationen dem Benutzer oder der Verwaltungsanwendung.

6. Vorrichtung gemäß Anspruch 5, bei der das gemeinsame Kanalsignalisierungsprotokoll das SS7-Protokoll ist, und bei dem ferner die statistische Steuerungsdatei (42) der Spezifikations- und Beschreibungs-Sprache entspricht, ebenfalls bezeichnet als SDL, und eine Beschreibung der Entitäten und entsprechender Zustandsmaschinen enthält, für die statistische Informationen dem Benutzer oder der Verwaltungsanwendung (43) berichtet werden sollen.

7. Vorrichtung gemäß Anspruch 6, bei der der SS7-Protokollstapel angeordnet ist, um mit dem Benutzer oder der Verwaltungsanwendung (43) durch Verwendung eines Verbindungsprozesskanals (45) zu kommunizieren, wie z. B. unter Verwendung eines gemeinschaftlich verwendeten Speichers oder eines TCP/IP-basierten Sockels.

8. Vorrichtung gemäß Anspruch 7, bei der die Verwaltungsanwendung (43) eine graphische Benutzerschnittstelle (44) zum Aktualisieren der Inhalte der statistischen Steuerungsdatei umfasst.

9. Ein gemeinsamer Kanalsignalisierungssystemprotokollstapel (41), der angepasst ist, um gemäß dem Verfahren gemäß einem der Ansprüche 1 bis 4 zu arbeiten.

10. Ein gemeinsamer Kanalsignalisierungssystemprotokollstapel (41), der folgende Merkmale aufweist:
eine statistische Steuerungsdatei (42), die Details von Entitäten enthält, einschließlich Verknüpfungen und Zielorte, für die eine statistische Benachrichtigung einem Benutzer oder einer Verwaltungsanwendung berichtet werden soll;
**gekennzeichnet durch**:
eine Einrichtung zum Erfassen einer Änderung bei dem Status einer Entität; und
eine Steuerungslogik zum Bestimmen des Vorhandenseins von Informationen innerhalb der statistischen Steuerungsdatei (42), die anzeigen, ob statistische Informationen, die sich auf die erfasste Änderung bei dem Status beziehen, berichtet werden sollen, und wenn ja, zum Erzeugen (54) der statistischen Informationen und zum Berichten (55) der Informationen dem Benutzer oder der Verwaltungsanwendung.

11. Ein gemeinsamer Kanalsignalisierungsprotokollstapel gemäß Anspruch 10, bei dem das gemeinsame Kanalsignalisierungsprotokoll das SS7-Protokoll ist und bei dem ferner die statistische Steuerungsdatei (42) der Spezifikations- und Beschreibungs-Sprache entspricht, ebenfalls bezeichnet als SDL, und eine Beschreibung der Entitäten und der entsprechenden Zustandsmaschinen enthält, für die statistische Informationen dem Benutzer oder der Verwaltungsanwendung (43) berichtet werden sollen.

12. Ein gemeinsamer Kanalsignalisierungssystemprotokollstapel gemäß Anspruch 10 oder 11, wobei der SS7-Protokollstapel angeordnet ist, um mit dem Benutzer oder der Verwaltungsanwendung (43) durch die Verwendung eines Verbindungsprozesskanals (45) zu kommunizieren, wie z. B. unter Verwendung eines gemeinschaftlich verwendeten Speichers oder eines TCP/IP-basierten Sockels.

13. Ein gemeinsamer Kanalsignalisierungssystemprotokollstapel gemäß Anspruch 12, bei dem die Verwaltungsanwendung (43) eine graphische Benutzerschnittstelle (44) zum Aktualisieren der Inhalte der statistischen Steuerungsdatei (42) umfasst.

14. Eine Verwaltungsanwendung für einen Signalisierungsknoten (40) eines Telekommunikationsnetzwerks, das mit einem gemeinsamen Kanalsignalisierungsprotokollstapel (41) kommuniziert, wobei die Verwaltungsanwendung **dadurch gekennzeichnet ist, dass** sie eine Einrichtung zum Aktualisieren einer statistischen Steuerungsdatei (SCF) umfasst, die in einem Signalisierungsprotokollstapel des Telekommunikationsnetzwerks angeordnet ist, wodurch die Erzeugung und das Berichten von statistischen Informationen von dem gemeinsamen Kanalsignalisierungsprotokollstapel gesteuert wird.

## Revendications

1. Procédé de commande de génération d'une information statistique devant être rapportée à un utilisateur ou une application d'administration (43) par une pile de protocole (41) de transmission à canal commun comprenant l'étape suivante :
- le maintien à l'intérieur de la pile de protocole d'un fichier de commande de statistiques (42) contenant des détails d'entités, comprenant des liens et des destinations, pour lesquelles une notification statistique doit être rapportée à l'utilisateur ou à l'application d'administration ;
**caractérisé par** les étapes suivantes :
- la détection d'un changement de l'état d'une entité ; et
- la détermination de la présence à l'intérieur du fichier de commande de statistiques (42) d'une information indiquant si l'information statistique concernant le changement détecté d'état doit être rapportée et si oui, la génération (54) de ladite information statistique et le rapport (55) de ladite information à l'utilisateur ou à l'application d'administration.

2. Procédé selon la revendication 1,
**caractérisé en ce que** le protocole de transmission à canal commun est le protocole de Système de Transmission 7, en abrégé le SS7, et le Fichier de Commande de Statistiques (42) est conforme au langage de spécification et de description, référencé plus loin comme le SDL, et contient une description des entités et des machines d'état correspondantes pour lesquelles une information statistique doit être rapportée à ladite application d'administration (43).

3. Procédé selon la revendication 3, **caractérisé en ce que** la piles de protocole SS7 communiquent avec l'utilisateur ou l'application d'administration (43) au moyen d'un canal de traitement d'interconnexion (45) comme sur la base d'une mémoire partagée ou d'une interface de connexion à base de TCP/IP.

4. Procédé selon l'une quelconque des revendications précédentes, **caractérisé en ce que** l'application d'administration comprend une interface graphique d'utilisateur (44) pour mettre à jour le contenu du Fichier de Commande de Statistiques.

5. Dispositif pour la commande de la génération d'une information statistique rapportée à un utilisateur ou une application d'administration (43) par une pile de protocole (41) de transmission à canal commun d'un noeud de télécommunication (40), le dispositif comprenant un Fichier de Commande de Statistiques (42) contenant des détails d'entités, y compris des liaisons et des destinations, pour lesquelles une notification de statistique doit être rapportée à l'utilisateur ou à l'application d'administration ;
**caractérisé en ce que** le dispositif comprend, de plus :
- un moyen pour la détection d'un changement de l'état d'une entité ; et
- un circuit logique de commande pour la détermination de la présence à l'intérieur du fichier de commande de statistiques (42) d'une information indiquant si l'information statistique concernant le changement détecté d'état doit être rapportée et si oui, pour la génération (54) de ladite information statistique et pour le rapport (55) de ladite information à l'utilisateur ou à l'application d'administration.

6. Dispositif selon la revendication 5, **caractérisé en ce que** le protocole de transmission à canal commun est le protocole SS7 et de plus, **en ce que** le Fichier de Commande de Statistiques (42) est conforme au langage de spécification et de description, référencé plus loin comme le SDL, et contient une description des entités et des machines d'état correspondantes pour lesquelles une information statistique doit être rapportée à ladite application d'administration (43).

7. Dispositif selon la revendication 6, **caractérisé en ce que** la pile de protocole SS7 est prévue pour communiquer avec l'utilisateur ou l'application d'administration (43) au moyen d'un canal de traitement d'interconnexion (45), comme sur la base d'une mémoire partagée ou d'une interface de connexion à base de TCP/IP.

8. Dispositif selon la revendication 7, **caractérisé en ce que** l'application d'administration (43) comprend une interface graphique d'utilisateur (44) pour mettre à jour le contenu du Fichier de Commande de Statistiques (42).

9. Pile de protocole de système de transmission à canal commun (41), **caractérisée en ce qu'**elle est prévue pour fonctionner selon le procédé selon l'un quelconque des revendications 1 à 4.

10. Pile de protocole de système de transmission à canal commun (41), comprenant :
- un Fichier de Commande de Statistiques (42) contenant des détails d'entités, y compris des liaisons et des destinations, pour lesquelles une information statistique doit être rapportée à un utilisateur ou une application d'administration ;
**caractérisée par** :
- un moyen pour la détection d'un changement de l'état d'une entité ; et
- un circuit logique de commande pour la détermination de la présence à l'intérieur du fichier de commande de statistiques (42) d'une information indiquant si l'information statistique concernant le changement détecté d'état doit être rapportée et si oui, pour la génération (54) de ladite information statistique et pour le rapport (55) de ladite information à l'utilisateur ou à l'application d'administration.

11. Pile de protocole de système de transmission à canal commun selon la revendication 10, **caractérisée en ce que** le protocole de transmission à canal commun est le protocole SS7 et de plus, **en ce que** le Fichier de Commande de Statistiques (42) est conforme au langage de spécification et de description, référencé plus loin comme le SDL, et contient une description des entités et des machines d'état correspondantes pour lesquelles une information statistique doit être rapportée à ladite application d'administration (43).

12. Pile de protocole de système de transmission à canal commun selon la revendication 10 ou 11, **caractérisée en ce que** la pile de protocole SS7 est prévue pour communiquer avec l'utilisateur ou l'application d'administration (43) au moyen d'un canal de traitement d'interconnexion (45), comme sur la base d'une mémoire partagée ou d'une interface de connexion à base de TCP/IP.

13. Pile de protocole de système de transmission à canal commun selon la revendication 12, **caractérisée en ce que** l'application d'administration (43) comprend une interface graphique d'utilisateur (44) pour mettre à jour le contenu du Fichier de Commande de Statistiques (42).

14. Application d'administration pour un noeud de transmission (40) d'un réseau de télécommunication communiquant avec une pile de protocole de Transmission à Canal Commun (41), ladite application d'administration étant **caractérisée en ce qu'**elle comprend un moyen pour mettre à jour un Fichier de Commande de Statistiques (SCF) placé à l'intérieur d'une pile de protocole de transmission du réseau de télécommunication, commandant ainsi la génération et le rapport d'une information statistique à partir de ladite pile de protocole de Transmission à canal Commun.
